# EUROPEAN PATENT APPLICATION

(11) **EP 1 103 366 A1**
(43) Date of publication of application: **30.05.2001**
(21) Application number: 99935060.6
(22) Date of filing: 04.08.1999
(51) Int. Cl.: B29C 51/10

(54) **OPEN TYPE POLYIMIDE MOLDED PRODUCT AND PRODUCTION METHOD THEREOF**

(30) Priority: 04.08.1998 JP 23362898
(71) Applicant: DU PONT-TORAY COMPANY, LTD., Chuo-ku, Tokyo 103-0023 (JP)
(72) Inventor: MACHIDA, Hideaki, Yokohama-shi, Kanagawa 234-0052 (JP); YOKOYAMA, Hirokazu, Handa-shi, Aichi 475-0962 (JP)
(74) Representative: Coleiro, Raymond
(86) International application number: JP9904214
(87) International publication number: WO0007802

(57) **Abstract**

An open-ended polyimide molding of an aromatic polyimide resin, which is characterized in that its wall thickness is at most 0.5 mm, and that the ratio of its depth to its opening is at least 0.7, or its longest major axis is at least 150 mm in length with its draw depth being at least 0.5 mm.

## Description

### TECHNICAL FIELD

The present invention relates to open-ended polyimide moldings with good heat resistance and electric insulation properties.

### PRIOR ART

With good heat resistance, polyimides have many applications for heat insulation, for example, for heat-insulating films for parts of electronic appliances, for heat-resistant parts of electric appliances, etc. At present, however, polyimides could not be formed into thin-walled moldings or large-sized moldings on an industrial scale, as their workability are poor.

One conventional method for producing relatively thin-walled polyimide moldings comprises molding aromatic polyimide powder through compression or sintering at high temperatures not lower than 450°C. Another method is known, which comprises molding polyimides relatively easy to soften, such as bismaleimides or polyethers, through compression or injection. Needless-to-say, these methods are for in-mold working.

Still another method is known, comprising applying a polyimide precursor, polyamic acid onto the surface of a desired mold to form a film thereon, followed by curing it under heat to give a polyimide molding.

On the other hand, further known is a method comprising molding a polyimide film having been prepared by sheeting a polyamic acid on a metal support, for which is used a female-male mold under heat and pressure.

The open-ended polyimide moldings thus produced include speaker diaphragms, reflectors for lighting appliances, piezoelectric devices for surface mounting, etc.

The prior art techniques noted above are effective in their own ways for the intended applications.

According to the prior art techniques, however, moldings, especially those having a wall thickness of not larger than 0.5 mm are difficult to produce, and it has heretofore been said that producing such thin-walled moldings on an industrial scale is impossible. The problems with the method of curing polyimide precursor films on molds are that uniform films could not be formed and that the films formed often have defects such as pin holes, etc. According to the method, therefore, complicated moldings with grooved or hilled surface profiles could not be obtained. The method of producing polyimide films through molding under heat or pressure requires heating the entire mold used therein. In the method, therefore, moldings with large opening area or large surface area are difficult to be produced. As a rule, polyimide films are not thermoplastic, and could not elongate sufficiently when softened under heat. Therefore, producing deep-drawn moldings of polyimide films is impossible.

Accordingly, the object of the invention is to solve the defects in the prior art noted above and to provide thin-walled, preferably deep-drawn, open-ended polyimide moldings and a method for producing them.

### DISCLOSURE OF THE INVENTION

To attain the object noted above, the invention includes the following means:
(1) An open-ended polyimide molding of an aromatic polyimide resin, which is characterized in that its wall thickness is at most 0.5 mm, and that the ratio of its depth to its opening is at least 0.7, or its longest major axis is at least 150 mm in length with its draw depth being at least 0.5 mm.
(2) The open-ended polyimide molding of above (1), which is such that its wall thickness falls between 0.001 and 0.3 mm, and that the ratio of its depth to its opening falls between 0.7 and 5.0, or its longest major axis falls between 150 and 10000 mm in length with its draw depth falling between 0.5 and 8000 mm.
(3) The open-ended polyimide molding of above (1), which is such that its wall thickness falls between 0.01 and 0.2 mm, and that the ratio of its depth to its opening falls between 1.0 and 3.0, or its longest major axis falls between 200 and 5000 mm in length with its draw depth falling between 1.0 and 2000 mm.
(4) The open-ended polyimide molding of any one of above (1) to (3), of which the aromatic polyimide is a thermoplastic aromatic polyimide.
(5) The open-ended polyimide molding of above (4), of which the thermoplastic polyimide has a glass transition temperature falling between 200 and 350°C and has a degree of elongation at break of from 50 to 2000 % at its glass transition temperature.
(6) A method for producing an open-ended polyimide molding having a wall thickness of at most 0.5 mm, which is characterized by forming a thermoplastic polyimide film in vacuum into its molding.
(7) The method for producing an open-ended polyimide molding of above (6), in which the molding produced is such that the ratio of its depth to its opening is at least 0.7, or its longest major axis is at least 150 mm in length with its draw depth being at least 0.5 mm.
(8) The method for producing an open-ended polyimide molding of above (6) or (7), in which the molding produced includes a plurality of repetitive patterns.
(9) The method for producing an open-ended polyimide molding of above (8), in which the molding is produced in one vacuum forming operation.

### BEST MODES OF CARRYING OUT THE INVENTION

The invention is described concretely hereinunder.

The aromatic polyimide is a condensate of an aromatic tetracarboxylic acid and an aliphatic or aromatic diamine. Typically, it is obtained by polycondensing a tetracarboxylic acid dianhydride such as pyromellitic acid dianhydride, biphenyltetracarboxylic acid dianhydride or the like with a diamine such as paraphenylenediamine, diaminodiphenyl ether or the like to give a polyamic acid, followed by curing it for ring closure under heat or with a catalyst. In the invention, preferred are thermoplastic aromatic polyimides. To obtain thermoplastic polyimides, for example, the following compounds may be copolymerized.

Dicarboxylic acid anhydrides for that purpose include pyromellitic acid dianhydride, 4,4'-hydroxydiphthalic acid dianhydride, 3,3',4,4'-benzophenonetetracarboxylic acid dianhydride, 2,2',3,3'-benzophenonetetracarboxylic acid dianhydride, 3,3',4,4'-biphenyltetracarboxylic acid dianhydride. 2,2',3,3'-biphenyltetracarboxylic acid dianhydride, 2,2-bis(3,4-dicarboxyphenyl)hexafluoropropane dianhydride, bis(3,4-dicarboxyphenyl) sulfone dianhydride, bis(3,4-dicarboxyphenyl) sulfide dianhydride, bis(2,3-dicarboxyphenyl)methane dianhydride, bis(3,4-dicarboxyphenyl)methane dianhydride, 1,1-bis(2,3-dicarboxyphenyl)methane dianhydride, 1,1-bis(2,3-dicarboxyphenyl)propane dianhydride, 2,2-bis(3,4-dicarboxyphenyl)propane dianhydride, m-phenylenebis(trimellitic acid) dianhydride, etc.

Diamines include hexamethylenediamine, heptamethylenediamine, 3,3'-dimethylpentamethylenediamine, 3-methylhexamethylenediamine, 3-methylheptamethylenediamine, 2,5-dimethylhexamethylenediamine, octamethylenediamine, nonamethylenediamine, 1,1,6,6-tetramethylhexamethylenediamine, 2,2,5,5-tetramethylhexamethylenediamine, 4,4-dimethylheptamethylenediamine, decamethylenediamine, m-phenylenediamine, 4,4'-diaminobenzophenone, 4-aminophenyl 3-aminobenzoate, m-aminobenzoyl-p-aminoanilide, 4,4'-diaminodiphenyl ether, 3,4'-diaminodiphenyl ether, bis(4-aminophenyl)methane, 1,1-bis(4-aminophenyl)ethane, 2,2-bis(4-aminophenyl)propane, 4,4'-diaminodiphenyl sulfoxide, 3,3'-diaminobenzophenone, 1,3-bis(4-aminophenoxy)benzene, 2,2'-diaminobenzophenone, 1,2-bis(4-aminophenoxy)benzene, 1,3-bis(4-aminobenzoyloxy)benzene, 4,4'-dimainobenzanilide, 4,4'-bis(4-aminophenoxy)phenyl ether, 2,2'-bis(4-aminophenyl)hexafluoropropane, 2,2'-bis(4-aminophenyl)-1,3-dichloro-1,1,3,3-tetrafluoropropane, 4,4'-diaminodiphenyl sulfone, 1,12-diaminododecane, 1,13-diaminododecane, polysiloxanediamine, etc.

Of the compounds noted above, preferred for use in the invention are copolymers of 1,3-bis(4-aminophenoxy)benzene (referred to as RODA), pyromellitic acid dianhydride (referred to as PMDA) and 4,4'-hydroxydiphthalic acid dianhydride; polymers of 4,4'-diaminodiphenyl ether (referred to as ODA) and 3,3',4,4'-biphenyltetracarboxyllc acid dianhydride (referred to as BPDA); and copolymers of ODA, PMDA and BPDA.

Thermoplastic aromatic polyimides soften when heated. Preferred for use in the invention are those having a glass transition point falling between 200 and 350°C, more preferably between 220 and 300°C. Also preferred are those having a degree of elongation at break at their glass transition temperature of from 50 to 2000 %, more preferably from 300 to 800 %.

The invention is to obtain open-ended moldings with no closed part, typically including tray-shaped, carrier belt-shaped or cup container-shaped moldings to be produced by deforming or drawing films. Needless-to-say, the open-ended moldings may be hot-sealed and integrated into closed moldings, owing to the hot-sealability of thermoplastic polyimides. The invention shall encompass such closed moldings. The method for obtaining the moldings is not specifically defined, to which is applicable any of vacuum forming, injection molding and the like or even their combination to give polyimide film-coated injection moldings.

The open-ended polyimide moldings of the invention have a wall thickness of at most 0.5 mm, preferably from 0.001 to 0.3 mm, more preferably from 0.01 to 0.2 mm.

The open-ended polyimide moldings of the invention are such that the ratio of the depth to the opening thereof is at least 0.7, or the longest major axis thereof is at least 150 mm in length with the draw depth thereof being at least 0.5 mm. For the moldings with the ratio of the depth to the opening thereof being at least 0.7, the length of the opening is not defined, but preferably, the draw depth ratio falls between 0.7 and 5.0, more preferably between 1.0 and 3.0. For the moldings with the longest major axis thereof being at least 150 mm in length, it is not always necessary that the ratio of the depth to the opening thereof is at least 0.7, but the draw depth thereof shall be at least 0.5 mm, preferably falling between 0.5 and 8000 mm, more preferably between 1.0 and 2000 mm.

In short, the invention is directed to thin-walled, open-ended polyimide moldings of two types both having a wall thickness of at most 0.5 mm, but one type being deep-drawn moldings having a draw ratio of at least 0.7, and the other being non-deep-drawn but large-sized moldings having a longest major axis of at least 150 mm in length.

The method for producing the open-ended polyimide moldings of the invention comprises forming a thermoplastic polyimide film in vacuum into its molding having a wall thickness of at most 0.5 mm. The open-ended polyimide moldings produced in the method may well have a wall thickness of at most 0.5 mm, but are preferably deep-drawn moldings having a draw ratio of at least 0.7, or non-deep-drawn but large-sized moldings having a longest major axis of at least 150 mm in length.

Vacuum forming includes a straight method, a draping method, an air-slip method, a snap-back method, a plug-assisted method, etc., any of which could apply to the invention. Apart from those, a pressure forming method could also apply to the invention. Accordingly, the invention encompasses the mode of pressure forming as one type of vacuum forming. The moldings produced according to the method of the invention may include a plurality of repetitive patterns. A series of plural moldings each having a predetermined form profile may be produced in the method, and it may be separated into individual moldings. In this case, the longest major axis of the series of plural moldings produced shall be at least 150 mm in length. In this case, however, patterning the series of plural moldings is preferably finished in one vacuum forming operation. This means that the method of that case is not for successively forming a pattern of each molding one after another on a film. However, for a carrier belt for which the polyimide molding shall have repetitive patterns and shall be long and windable into a roll, the total length of the carrier belt shall differ from the length of the longest major axis defined herein. Namely, the longest major axis referred to in the invention for the profile of such a carrier belt indicates the length of one molding that includes a plurality of repetitive patterns to be formed in one molding operation. Therefore, the carrier belt itself could be obtained by repeating a plurality of times the forming operation of the invention (that is, the operation of forming a plurality of patterns) on a long film.

### EXAMPLE

The invention is described in more detail with reference to the following Example. In the Example, the glass transition temperature of each sample was measured through DSC, and the degree of elongation thereof at break was measured according to the method mentioned below.

### Degree of Elongation at Break:

A thermostat in which the temperature difference of 5°C can be controlled is first heated up to the glass transition temperature (Tg) of the sample to be tested, and a part of a tensile tester (defined in JIS C-2381) with the sample mounted thereon is inserted into the thermostat. In that condition, after the film has reached its Tg (after about 1 hour), the degree of elongation of the sample is measured according to JIS C-2318.

### Example 1:

A thermoplastic aromatic polyimide film of 0.075 mm thick ("Kapton" 300KJ from DuPont, having a glass transition temperature of 220°C and having a degree of elongation at break at 220°C of 550 %) was fixed to a metallic frame with its periphery being held by the frame, and the center part of the film was heated at 280°C. In that condition, the film was grounded on a female mold equipped with a degassing mechanism, and the mold was degassed to attain vacuum forming of the film. One mold used herein had an opening of 200 mm and a draw depth of 70 mm; and the other had an opening of 35 mm and a draw depth of 52.5 mm. The both were patterned open-type molds, and the latter was a drawing mold having a ratio of the depth to the opening of 1.5. The moldings thus produced through vacuum forming were almost uniform in thickness, and correctly received the mold pattern.

### INDUSTRIAL APPLICABILITY

The invention provides thin-walled, deep-drawn or large-sized, open-ended polyimide moldings which have good heat resistance and electric insulation properties and which are easy to produce through vacuum forming. The moldings are usable, for example, for speaker diaphragms, reflectors for lighting appliances, piezoelectric devices for surface mounting, etc.

## Claims

1. An open-ended polyimide molding of an aromatic polyimide resin, which is characterized in that its wall thickness is at most 0.5 mm, and that the ratio of its depth to its opening is at least 0.7, or its longest major axis is at least 150 mm in length with its draw depth being at least 0.5 mm.

2. The open-ended polyimide molding as claimed in claim 1, which is such that its wall thickness falls between 0.001 and 0.3 mm, and that the ratio of its depth to its opening falls between 0.7 and 5.0, or its longest major axis falls between 150 and 10000 mm in length with its draw depth falling between 0.2 and 8000 mm.

3. The open-ended polyimide molding as claimed in claim 1, which is such that its wall thickness falls between 0.01 and 0.2 mm, and that the ratio of its depth to its opening falls between 1.0 and 3.0, or its longest major axis falls between 200 and 5000 mm in length with its draw depth falling between 1.0 and 2000 mm.

4. The open-ended polyimide molding of any one of claims 1 to 3, of which the aromatic polyimide is a thermoplastic aromatic polyimide.

5. The open-ended polyimide molding as claimed in claim 4, of which the thermoplastic polyimide has a glass transition temperature falling between 200 and 350°C and has a degree of elongation at break of from 50 to 2000 % at its glass transition temperature.

6. A method for producing an open-ended polyimide molding having a wall thickness of at most 0.5 mm, which is characterized by forming a thermoplastic polyimide film in vacuum into its molding.

7. The method for producing an open-ended polyimide molding as claimed in claim 6, in which the molding produced is such that the ratio of its depth to its opening is at least 0.7, or its longest major axis is at least 150 mm in length with its draw depth being at least 0.5 mm.

8. The method for producing an open-ended polyimide molding as claimed in claim 6 or 7, in which the molding produced includes a plurality of repetitive patterns.

9. The method for producing an open-ended polyimide molding as claimed in claim 8, in which the molding is produced in one vacuum forming operation.
